# EUROPÄISCHE PATENTSCHRIFT

(11) **EP 1 929 109 B1**
(45) Veröffentlichungstag und Bekanntmachung des Hinweises auf die Patenterteilung: **21.10.2015**
(21) Anmeldenummer: 06793749.0
(22) Anmeldetag: 22.09.2006
(51) Int. Cl.: E04H 12/16

(54) **TURMKONSTRUKTION**
TOWER CONSTRUCTION
CONCEPT DE TOUR

(30) Priorität: 23.09.2005 EP 05108817
(43) Veröffentlichungstag der Anmeldung: 11.06.2008
(73) Patentinhaber: Sika Technology AG, 6340 Baar (CH)
(72) Erfinder: IRNIGER, Philipp, CH-8406 Winterthur (CH); CLENIN, Reto, CH-8523 Hagenbuch (CH)
(74) Vertreter: Sika Patent Attorneys
(86) Internationale Anmeldenummer: PCT/EP2006/066631
(87) Internationale Veröffentlichungsnummer: WO 2007/033991

(56) Entgegenhaltungen:
- DE-A1- 2 952 774
- US-A1- 2004 074 171

## Beschreibung

### Technisches Gebiet

Die Erfindung betrifft eine röhrenförmige Turmkonstruktion, welche einen Ringquerschnitt aufweist und aus mehreren gleichförmigen Bauteilen zusammen gesetzt ist.

### Stand der Technik

Es ist beispielsweise bekannt, Turmkonstruktionen für Windenergie- oder Fernmeldeanlagen aus Stahlteilen herzustellen, wobei die Aussenwandungen dieser Turmkonstruktionen aus gebogenen Blechplatten bestehen und anschliessend mehrere Teilröhren aufeinander gesetzt werden um die gesamte Turmkonstruktion zu bilden. Die einzelnen Teilröhren werden dabei durch Flansche miteinander verbunden. Es ist auch bekannt, solche Turmkonstruktionen aus Stahlbeton vor Ort mit Kletter- oder Gleitschalung oder aus Stahlbetonelementen herzustellen, wobei die Bewehrung jeweils vor dem Betonieren eingebaut werden muss. Eine solche Bewehrung ist zeit- und kostenaufwändig in der Herstellung. Zudem kann auch eine korrekt bemessene Bewehrung die durch Zwang bedingten Risse nicht verhindern, sondern lediglich die Anzahl Risse und die Rissweiten beeinflussen.

Dokument US 2004/074171 A1 offenbart eine Turmkonstruktion, die die Merkmale des Oberbegriffes des Anspruch 1 aufweist.

### Darstellung der Erfindung

Es ist Aufgabe der Erfindung, eine Turmkonstruktion vorzuschlagen, welche thermisch bedingten Zwängungen in der Turmstruktur und somit die Neigung zur Rissbildung reduziert, sowie den Einsatz von Faserbeton ermöglicht. Die vorgeschlagene Tragkonstruktion soll ausserdem aus einfachen, problemlos transportablen und möglichst gleichartigen Bauteile bestehen, die in Serienproduktion hergestellt werden können.

Diese Aufgabe wird durch die Merkmale des unabhängigen Patentanspruches gelöst. Vorteilhafte Weiterbildungen der Erfindung sind Gegenstand untergeordneter Ansprüche.

Die Erfinder haben erkannt, dass es möglich ist, eine Turmstruktur mit Ringquerschnitt aus Fertigteilen in Faserbeton herzustellen. Hierzu wird die gesamte Turmkonstruktion in mehrere Teilröhren unterteilt, welche in sich aus mehreren Röhrensegmenten bestehen, die aus Beton, vorzugsweise Faserbeton, vorgefertigt werden. Im Werk oder auf der Baustelle werden die einzelnen Röhrensegmente zu einem vollständigen Ring zusammengefügt. Die Fugen zwischen den Röhrensegmenten der gleichen Teilröhre weisen ein gewisses Verdrehungsvermögen um die Fugenachse auf. Um dieser Konstruktion einer Teilröhre Stabilität zu geben, werden in Umfangsrichtung permanente Spannvorrichtungen angebrächt, die die einzelnen Röhrensegmente zu einer Teilröhre zusammen halten. Durch Aufeinanderstapelung mehrerer Teilröhren kann die gesamte Turmstruktur aufgebaut werden. Die Fugen zwischen den einzelnen Teilröhren werden wiederum mit Fugenfüllmaterial ausgefüllt und die Teilröhren untereinander durch vertikale Verspannungen zusammengespannt. Durch diese Bauweise werden die thermisch bedingten Zwängungen entlang dem Umfang vernachlässigbar und sind nicht mehr massgebend für die Bewehrung.

Günstig ist es die Vertikalfugen eines Ringquerschnitts in die Verlängerung der Vertikalfugen eines darunter liegenden Ringquerschnittes zu legen. Die Ringvorspannungen können extern oder intern, mit oder ohne Verbund appliziert werden. Die Vertikalfugen oder sogenannte Gelenkfugen ermöglichen ein relativ zwängungsfreies Verdrehen zwischen zwei angrenzenden Röhrensegmenten um die Achse der Fuge. Gleichzeitig stellen die Gelenkfugen die Übertragung von Schub und Normalkräften zwischen zwei angrenzenden Röhrensegmenten sicher. Die Gelenkwirkung im Horizontalschnitt wird durch das Fugenverfüllmaterial entweder über die ebene Kontaktfläche zwischen den angrenzenden Röhrensegmenten, durch Formstücke - beispielsweise durch Querkraftdorne oder durch eine eingefügte Drehachse -, durch passgenaue Formgebung, durch teilweise passgenaue Formgebung oder durch eine Kombination der aufgeführten Massnahmen erreicht.

Der Abschluss der Röhrensegmente im Bereich der Fugen kann somit auch aus separat hergestellten Formstücken bestehen. Diese Formstücke können aus dem gleichen Werkstoff wie das Röhrensegment oder aus einem anderen, vorzugsweise widerstandsfähigerem Werkstoff (z.B. UHPC) bestehen. Die Formstücke können vorgängig in die Schalung verlegt oder nachträglich auf die Stirnfläche des Röhrensegments mit Hilfe von Klebstoff oder Mörtel appliziert werden. Die Schubkraftübertragung im Vertikalschnitt wird damit bei einer ebenen Fuge durch das Fugenverfüllmaterial, durch Querkraftdorne, durch passgenaue oder teilweise passgenaue Formgebung oder durch eine Kombination dieser Massnahmen sichergestellt. Als Fugenverfüllmaterial kann vorzugsweise Klebstoff, Mörtel oder Folie eingesetzt werden. Insbesondere können auch die Eigenschaften der Fugenverfüllmaterialien über den Fugenquerschnitt veränderlich gewählt werden. Auch können unterschiedliche Fugenverfüllmaterialien angewendet werden. Auf Teilflächen der Querschnittsfläche der Fuge kann auch auf ein Fugenverfüllmaterial verzichtet werden.

Die Horizontalfugen können analog zu den Vertikal- oder Gelenkfugen ausgebildet sein.

Durch diesen Aufbau ist der Turm aufgrund der in Grenzen gelenkig ausgestalteten Fugen, insbesondere der vertikalen Fugen, im Querschnitt im Wesentlichen statisch bestimmt, ohne dass das Tragverhalten, insbesondere die Festigkeit, die Verformung und die Stabilität der gesamten Turmkonstruktion beeinträchtigt ist. Weiterhin ist es bei der Verwendung von Faserbeton vorteilhaft, dass die aufwendige Herstellung sowie der aufwendige Einbau der für jeden Turmabschnitt separat konfektionierten Stahlbewehrung entfällt. Die Konstruktion neigt gegenüber den konventionell mit Beton hergestellten Turmkonstruktionen wesentlich weniger zur Rissbildung und lässt sich durch relativ kleine und seriengefertigte Teilelemente mit grosser Präzision herstellen.

Entsprechend diesem Grundgedanken schlagen die Erfinder eine Turmkonstruktion vor, welche einen Ringquerschnitt aufweist und aus einer oder mehreren konzentrisch aufeinander angeordneten Teilröhren besteht, wobei zumindest eine Teilröhre aus mindestens drei Röhrensegmenten aufgebaut ist, wobei weiterhin die Röhrensegmente mindestens einer Teilröhre durch Spannvorrichtungen, nachfolgend Segmentspannvorrichtungen genannt, gegeneinander vorgespannt sind und die Teilröhre zumindest in axialer Richtung wirkende und über mindestens eine Horizontalfuge reichende Spannvorrichtungen, nachfolgend Teilröhrenspannvorrichtungen genannt, aufweisen. Die Röhrensegmente und die daraus zusammengesetzten Teilröhren bilden an ihren Stosskanten Fugen mit Zwischenräumen, wobei die Stosskanten zumindest teilweise derart geformt sind, das sie unmittelbar oder mit Hilfe eines zusätzlichen Formelementes eine formschlüssige Verbindung erzeugen, die in zumindest einer Richtung wirkt, wobei die Zwischenräume der Fugen zumindest teilweise mit einem Fugenfüllmaterial ausgefüllt werden. Vorteilhaft kann die Turmkonstruktion derart gestaltet werden, dass zumindest eine Fuge zwischen zumindest zwei Röhrensegmenten in vertikaler Richtung verläuft. Alternativ besteht auch die Möglichkeit, eine derartige Fuge schräg zugestalten, so dass eine Art spiralenförmiger Verlauf der Fugen entsteht. Des Weiteren kann auch zumindest eine Fuge zwischen zwei Teilröhren in horizontaler Richtung angeordnet werden.

In einer besonderen Ausführungsvariante der Turmkonstruktion, können vertikale und/oder horizontale Stosskanten zumindest teilweise derart ausgebildet sein, dass sie unmittelbar oder mit Hilfe eines zusätzlichen Formelementes eine formschlüssige Verbindung bilden, die in zumindest einer Richtung wirkt. Durch diese formschlüssigen Verbindungen zwischen den einzelnen Röhrensegmenten ergibt sich eine höhere Festigkeit, insbesondere Schubfestigkeit, als bei einfachen glatten Fugen. Die Formgebung solcher formschlüssiger Verbindungen sind allgemein bekannt und es besteht grundsätzlich keine Begrenzung in diesen Varianten, jedoch ist es vorteilhaft, sie derart auszuführen, dass eine Herstellung durch einfaches Vergiessen der Röhrensegmente möglich ist.

Bezüglich der Teilröhrenspannvorrichtungen ist es möglich diese zumindest teilweise innerhalb der Wandungen der Teilröhren beziehungsweise der Röhrensegmente verlaufen zulassen, allerdings besteht auch die Möglichkeit, diese Teilröhrenspannvorrichtungen ausserhalb der Wandungen der Teilröhren anzuordnen. Die Teilröhrenspannvorrichtung kann zumindest teilweise im Verbund mit den Teilröhren wirken.

Bezüglich der Segmentspannvorrichtungen besteht ebenfalls die Möglichkeit, dass diese zumindest teilweise innerhalb der Wandungen der Teilröhren verlaufen, allerdings kann es vorteilhaft sein, insbesondere bezüglich des Fertigungsprozesses, die Segmentspannvorrichtungen zumindest teilweise ausserhalb der Wandungen der Teilröhren anzuordnen. Die Segmentspannvorrichtung kann zumindest teilweise im Verbund mit den Röhrensegmenten wirken.

Als Fugenfüllmaterial kann vorteilhaft zumindest in einigen Fugen elastisches Füllmaterial verwendet werden, wobei darauf hingewiesen wird, dass unterschiedliche Fugen auch unterschiedliches Füllmaterial aufweisen können. Als Fugenmaterial kann beispielsweise Klebstoff, Mörtel oder auch Folie genutzt werden. In einer besonderen Ausführung kann sogar auch das Fugenfüllmaterial derart ausgebildet werden, dass es über den Querschnitt der verfüllten Fuge unterschiedliche Eigenschaften aufweist.

Bezüglich der Anordnung der Fugen in der Turmkonstruktion schlagen die Erfinder in einer besonders vorteilhaften Variante vor, dass die in vertikaler Richtung entlang der Wandung verlaufenden Fugen der Teilröhren miteinander fluchtend angeordnet sind.

Weiterhin wird vorgeschlagen, dass die formschlüssigen Verbindungen, zumindest teilweise, zwischen den Röhrensegmenten gegenseitig verzahnte Verläufe aufweisen. Es ist auch möglich, die formschlüssigen Verbindungen zumindest teilweise zwischen den Röhrensegmenten mit gegenseitig komplementären Verläufen oder nicht-komplementären Verläufen auszustatten.

Eine weitere Möglichkeit einer formschlüssigen Verbindung besteht darin, dass zwischen den Röhrensegmenten ein zusätzliches Formelement, eine Nut-Feder-Verbindung, ausgebildet wird. Das heisst, die beiden aufeinander stossenden Röhrensegmente weisen jeweils eine Nut auf, in die ein zusätzliches Formelement eingesetzt wird und damit eine Verschiebung der Röhrensegmente gegeneinander verhindert wird. Vorteilhaft ist es hierbei, wenn derartige Formelemente aus dem gleichen Material hergestellt werden wie die Röhrensegmente, da damit Probleme, die durch unterschiedliche Ausdehnungskoeffizienten entstehen könnten, von vorne herein ausgeschlossen werden. Falls dieses Problem jedoch nicht im Vordergrund steht und viel mehr eine besondere Zugfestigkeit für derartige Formelemente gefordert wird, beispielsweise wenn ein solches Formelement kombiniert auch gleichzeitig als Spannvorrichtung eingesetzt wird, so kann es vorteilhaft sein, diese aus Metall herzustellen.

In besonders vorteilhafter Weise werden die Röhrensegmente aus Faserbeton hergestellt, da in der Regel hierbei keine besondere Bewehrung notwendig ist. Es wird jedoch darauf hingewiesen, dass es auch im Rahmen der Erfindung liegt, wenn zur Steigerung der Festigkeit zusätzliche Bewehrungen in den Röhrensegmenten eingebaut werden oder wenn diese ausschliesslich aus Stahlbeton bestehen. Besonders vorteilhaft kann eine solche zusätzliche Bewehrung dann sein, wenn sie ausschliesslich im fugenangrenzenden Bereich angeordnet wird. Bezüglich des Aufbaues der Turmkonstruktion kann es im Rahmen der Erfindung auch vorteilhaft sein, wenn zumindest an einem Ende der Turmkonstruktion auf vertikale Fugen verzichtet wird, das heisst ein Bauteil verwendet wird, welches frei von derartigen Fugen ist, beispielsweise kann es in konventioneller Weise hergestellt werden.

Die Turmkonstruktion an sich und damit auch die Teilröhren können beispielsweise zylindrisch oder konisch ausgebildet werden. Grundsätzlich ist es auch möglich Teilröhren aufeinander zu stapeln, die zwar zylindrisch ausgebildet sind, jedoch mit zunehmender Höhe einen kleineren Radius aufweisen. Hierdurch ergeben sich an den Stossstellen der einzelnen Teilröhren entsprechende Absätze.

Die erfindungsgemässe Turmkonstruktion kann beispielsweise ein Teil einer Windkraftanlage oder einer Fernmeldeanlage oder eines Leuchtturms sein oder sie kann auch zum Bau eines Kamins oder eines Kühlturms verwendet werden.

### Kurze Beschreibung der Zeichnungen

Im Folgenden wird die Erfindung anhand bevorzugter Ausführungsbeispiele mit Hilfe der Figuren näher beschrieben, wobei nur die zum Verständnis der Erfindung notwendigen Merkmale dargestellt sind. Gleiche Elemente sind in den verschiedenen Figuren mit den gleichen Bezugszeichen versehen.

Es zeigen im Einzelnen:
- Figur 1:: 3D-Darstellung der Zusammensetzung eines Teilzylinders aus Zylindersegmenten;
- Figur 2:: Teilzylinder mit Ringverspannung;
- Figur 3:: Röhrenkonstruktion aus drei Teilzylindern mit Vertikalverspannung;
- Figur 4:: Detailansicht einer Stosskante zwischen zwei Zylindersegmenten im horizontalen Querschnitt;
- Figur 5:: vertikaler Schnitt zu Figur 4;
- Figur 6:: horizontaler Schnitt durch eine Fuge zwischen zwei Zylindersegmenten nach dem Nut-Feder-Prinzip;
- Figur 7:: Fuge aus Figur 6 im Vertikalschnitt;
- Figur 8:: vertikale Fuge zwischen zwei Zylindersegmenten mit zylindrischem Formelement in der Fuge;
- Figur 9:: Fuge aus Figur 8 im Vertikalschnitt;
- Figur 10:: vertikale Fuge zwischen zwei Zylindersegmenten mit komplementärer Formgebung der Stosskanten der Zylindersegmente;
- Figur 11:: Fuge aus Figur 10 im Vertikalschnitt;
- Figur 12:: Fuge zwischen zwei Zylindersegmenten im Horizontalschnitt mit ungleich geformten und ineinander verzahnten Stosskanten, zusätzlich mit Bewehrung im Bereich der Stosskanten;
- Figur 13:: vertikaler Schnitt durch die Fuge aus Figur 12;

### Weg zur Ausführung der Erfindung

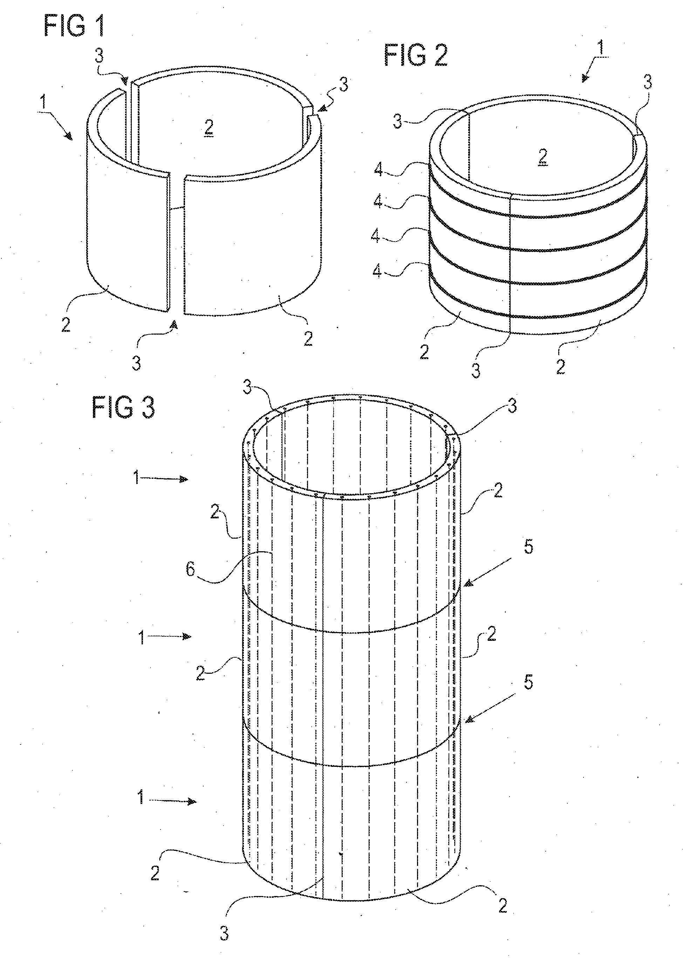

In den Figuren 1 bis 3 soll der grundsätzliche Aufbau der erfindungsgemässen Turmkonstruktion dargestellt werden, wobei darauf hingewiesen wird, dass in diesem Beispiel zwar ausschliesslich eine zylindrische Turmkonstruktion gezeigt ist, jedoch ohne weiteres analog hierzu eine konische Turmkonstruktion erstellt werden kann. Ebenso kann auch eine Turmkonstruktion mit sich nach oben verjüngenden Teilzylindern aufgebaut werden. Die Figur 1 zeigt eine 3D-Darstellung der Zusammensetzung eines Teilzylinders 1 aus drei Zylindersegmenten 2. Zwischen den Zylindersegmenten 2 bilden sich Fugen 3, die durch ein entsprechendes Fugenfüllmaterial gefüllt werden. Diese hier dargestellten Zylindersegmente werden, wie es in der Figur 2 gezeigt ist, dicht aneinander gerückt und mit Hilfe von mehreren Ringverspannungen 4 zusammen gehalten. Die Ringverspannungen 4 sorgen für einen festen Halt des gesamten Teilzylinders 1, wobei jedoch über die Fugen 3, die auch Gelenkfugen genannt werden, ein gewisses Verdrehungsvermögen um die Fugenachse vorliegt.

Zum Aufbau der gesamten Turmkonstruktion werden nun mehrere solcher Teilzylinder aus der Figur 2 aufeinander gestapelt, so dass sich eine komplette Turmkonstruktion, wie sie in der Figur 3 dargestellt ist, ergibt. Es ist allerdings darauf hinzuweisen, dass der Aufbau der Turmkonstruktion auch durch sukzessives aufeinander fügen von einzelnen Röhrensegmenten möglich ist. Es müssen also nicht unbedingt zunächst fertige Teilröhren gebaut und diese vorgefertigt aufeinander gestapelt werden, wesentlich ist der gesamte konstruktive Aufbau. Es ist zudem darauf hinzuweisen, dass die Turmkonstruktion auch nur aus einer einzigen Teilröhre bestehen kann.

Zur Sicherstellung des Zusammenwirkens, insb. auf Zugbeanspruchung, zwischen den einzelnen Teilzylindern 1 werden vertikale Spannelemente 6 eingefügt, die die einzelnen Teilzylinder miteinander verbinden. Hierbei können beispielsweise Spannelemente verwendet werden, die über die gesamte Höhe der Turmkonstruktion reichen und alle Teilzylinder miteinander verbinden. Es besteht jedoch auch die Möglichkeit, dass relativ kurze, vertikale Spannelemente verwendet werden, die lediglich einige wenige, aber mindestens zwei Teilzylinder miteinander verbinden oder einen Teilzylinder in der Turmgründung verankern. Durch abwechselnde Verbindung von darüber und darunter liegender Teilzylinder können insgesamt alle Teilzylinder miteinander verbunden werden.

Die zwischen den einzelnen Teilzylinder horizontal verlaufenden Fugen 5 können, wie es hier im Beispiel gezeigt ist, ebenso glatt ausgebildet werden wie die vertikalen Fugen 3 der Teilsegmente, wobei auch hier in den horizontalen Fugen ein Fugenfüllmaterial eingebracht werden sollte.

Aufgrund der Konstruktionsweise dieses Turms besteht ein gewisses Verdrehungsvermögen zwischen den einzelnen Segmenten um die Fugenachse der vertikalen Fugen 3, so dass die insbesondere thermisch bedingten Zwängungen in der Turmstruktur und somit die Rissneigung reduziert werden.

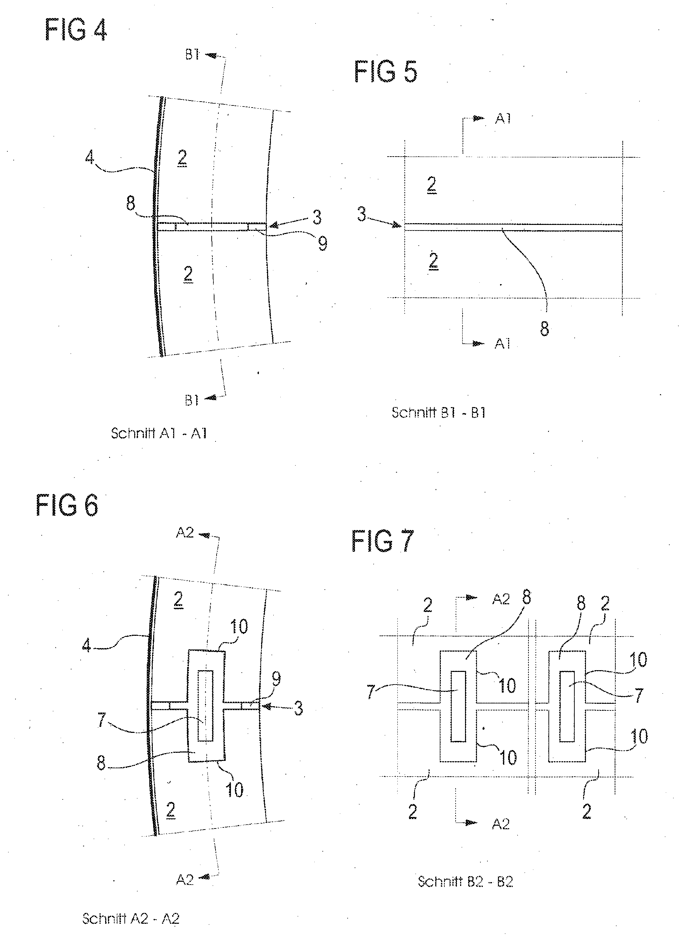

In den folgenden Figuren 4 bis 13 sind verschiedene Beispiele der Fugenausbildung dargestellt, wobei sich die Darstellung zwar auf die vertikalen Fugen zwischen den einzelnen Teilsegmenten beschränkt, jedoch liegt es im Rahmen der Erfindung die gleichen oder ähnliche Fugenkonstruktionen auch für die horizontal verlaufenden Fugen zwischen den einzelnen Teilzylindern anzuwenden. Im Gegensatz zu den vertikalen Fugen spielt bei den horizontalen Fugen das Verdrehungsvermögen zwischen den angrenzenden Teilzylindern eine untergeordnete Rolle.

Die Figur 4 zeigt einen horizontalen Querschnitt durch eine vertikale Fuge 3 zwischen zwei Zylindersegmenten 2. Diese Fuge 3 ist vollkommen glatt ausgebildet, wobei im Fugenzwischenraum 9 ein Füllmaterial 8 eingebracht ist, welches für eine vorzugsweise gelenkartige Verbindung zwischen den einzelnen Zylindersegmenten sorgt. Im vorliegenden Fall verhindert ausschliesslich die umlaufende Ringverspannung 4 und die Zylindergeometrie der Konstruktion im Zusammenhang mit der Schubfestigkeit des Fugenfüllmaterials eine Querverschiebung der einzelnen Zylindersegmente.

Die Figur 5 zeigt die gleiche Fuge 3 wie in der Figur 4 jedoch in einem senkrechten Schnitt. Auch hier ist erkennbar, dass die Fuge 3 lediglich eine glatte Struktur aufweist.

Ein Beispiel einer Formschlussverbindung zwischen den einzelnen Zylindersegmenten in Verbindung mit einem zusätzlichen Formstück ist in den Figuren 6 und 7 dargestellt. Die Figur 6 zeigt wiederum einen horizontalen Querschnitt einer Detailansicht in der unmittelbaren Umgebung einer vertikalen Fuge 3. Die beiden Zylindersegmente 2 weisen jeweils eine Nut 10 auf, in die ein Formstück 7 eingesetzt ist. Der verbleibende Freiraum wird dabei durch Fugenfüllmaterial 8 aufgefüllt. Aufgrund der geometrischen Anordnung des Formstückes 7 ergibt sich eine gute Sicherung der beiden Zylindersegmente gegen eine relative Querverschiebung in radialer Richtung, so dass durch das Fugenfüllmaterial 8 im Wesentlichen für das Verdrehungsvermögen der Verbindung um die Achse der Fuge 3 gesorgt werden kann, ohne unbedingt stark haftende Eigenschaften aufweisen zu müssen.

Die Figur 7 zeigt die Fuge aus der Figur 6 jedoch in einem vertikalen Schnitt. Hier ist zu erkennen, dass in vertikaler Richtung weitere einzelne Nuten angeordnet sind, in denen ebenfalls Formstücke 7 eingebracht wurden, die in ihrer Funktion im Wesentlichen eine Senkrechtverschiebung zwischen den Segmenten verhindern. Auch hier ist im umgebenden Freiraum 9 um die Formelemente 7 Fugenfüllmaterial 8 eingesetzt.

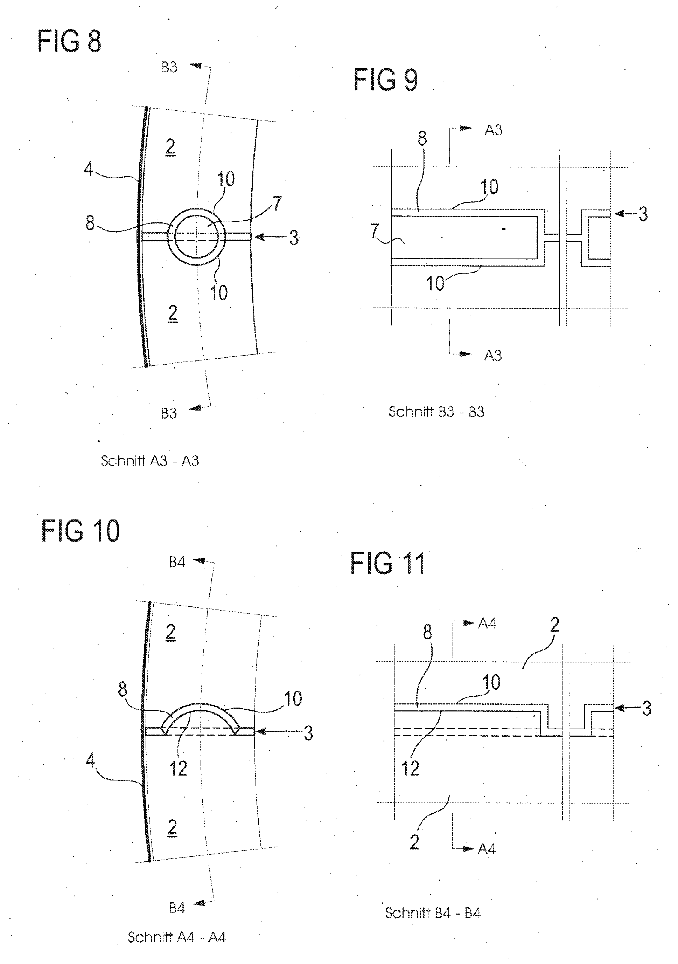

Anstelle des flachstabähnlich ausgebildeten Formelements 7 aus der Ausführungsform der Figuren 6 und 7 kann beispielhaft auch ein Rundstab verwendet werden, wie hier im Beispiel der Figuren 8 und 9 gezeigt ist. Die senkrecht verlaufende Nut 10 im Stossbereich der Zylindersegmente ist hier halbkreisförmig ausgebildet, in die ein rundstabförmiges Formelement 7 eingesetzt wird. Auch eine derartige Verbindung kann hohe Querkräfte in radialer Richtung aufnehmen und gleichzeitig ein gewisses Verdrehungsvermögen um die Achse der Fuge 3 erlauben. Die Figur 9 zeigt wiederum den senkrechten Schnitt durch die Fuge 3 der Figur 8, wobei zu erkennen ist, dass das Formelement 7 nicht über die gesamte Höhe des Zylindersegmentes reicht, sondern lediglich über eine Teilstrecke angeordnet ist.

Ein anderes Beispiel einer formschlüssigen Fugenverbindung zwischen den Zylindersegmenten ist in den Figuren 10 und 11 dargestellt. Die Figur 10 zeigt einen Querschnitt im Bereich einer vertikalen Fuge 3, wobei im Bereich des oben dargestellten Zylindersegmentes 2 eine etwa halbkreisförmige Nut 10 ausgespart ist, während auf dem unten dargestellten Zylindersegment 2 eine komplementäre halbkreisförmige Erhebung 12 geformt ist. Im Fugenzwischenraum 9 wird auch hier Fugenfüllmaterial 8 eingebracht.

In dem hier dargestellten Ausführungsbeispiel verläuft diese formschlüssige Verbindung nicht über die gesamte Höhe des Zylindersegmentes, sondern lediglich über eine Teilstrecke, wie es in der Figur 11, die einen vertikalen Schnitt dieser Fuge darstellt, erkennbar ist. Durch diese Ausführungsform wird zusätzlich eine formschlüssige Verbindung zwischen den Zylindersegmenten erreicht, die nicht nur in radialer Richtung zu einem Formschluss führt, sondern auch in axialer Richtung einen Formschluss zwischen den einzelnen Zylindersegmenten erzeugt.

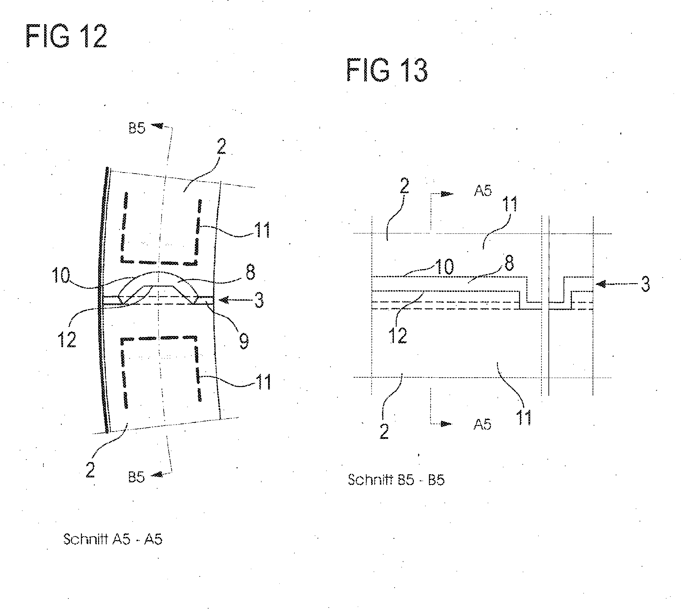

Ein weiteres Detailmerkmal der erfindungsgemässen Turmkonstruktion ist in den Figuren 12 und 13 dargestellt. Die Figur 12 zeigt zwei Zylindersegmente 2, wiederum im Fugenbereich im horizontalen Querschnitt, wobei das obere Zylindersegment 2 an der Fuge 3 wiederum über eine halbkreisförmige Nut 10 verfügt, in die eine trapezartige Erhebung 12 des gegenüber liegenden Zylindersegments 2 eingreift. Auch durch diese Formgebung im Fugenbereich wird ein gewisses Verdrehungsvermögen um die Achse der Fuge 3 erreicht, wobei ebenfalls im Fugenzwischenraum hier Fugenfüllmaterial 8 eingefügt werden kann. Zur Versteifung und Festigung der Randbereiche der Zylindersegmente ist zusätzlich eine Bewehrung 11 in die Zylindersegmente eingebracht, so dass die Randbereiche der Zylindersegmente höheren Belastungen gerecht werden können.

Die Figur 13 zeigt nochmals die Fuge aus der Figur 12, jedoch im vertikalen Schnitt. Ebenso wie in der Figur 12 ist auch hier ein zusätzlicher Formschluss in vertikaler Richtung gegeben, in dem der Nutbereich mit der entsprechenden Erhebung auf der anderen Seite des Zylindersegments nur über einen Teil der Gesamthöhe des Zylindersegments reicht und dadurch nochmals einen Formschluss bildet.

### Bezugszeichenliste

- 1: Teilzylinder
- 2: Zylindersegment
- 3: Fuge zwischen Zylindersegmenten
- 4: Ringverspannung
- 5: Fuge zwischen Teilzylindern
- 6: vertikale Spannelemente
- 7: Formstück
- 8: Fugenfüllmaterial
- 9: freier Fugenzwischenraum
- 10: Nut
- 11: Bewehrung
- 12: Erhebung

## Patentansprüche

1. Turmkonstruktion aufweisend einen Ringquerschnitt, zumindest bestehend aus mehreren konzentrisch aufeinander angeordneten Teilröhren (1), wobei
- zumindest eine Teilröhre (1) aus Röhrensegmenten (2) aufgebaut ist,
- die Teilröhre (1) zumindest in axialer Richtung wirkende und über mindestens eine Horizontalfuge (5) reichende Spannvorrichtungen, nachfolgend Teilröhrenspannvorrichtungen genannt, aufweisen,
- die Röhrensegmente (2) und die daraus zusammengesetzten Teilröhren (1) an ihren Stosskanten Fugen (3) mit Zwischenräumen (9) bilden und
- die Zwischenräume (9) der Fugen (3) zumindest teilweise mit einem Fugenfüllmaterial (8) ausgefüllt sind, **dadurch gekennzeichnet, dass** die zumindest eine Teilröhre (1) aus mindestens drei Röhrensegmenten (2) aufgebaut ist, dass die Röhrensegmente (2) zumindest einer Teilröhre (1) durch Spannvorrichtungen, nachfolgend Segmentspannvorrichtungen genannt, gegeneinander vorgespannt sind und dass die gefüllten Fugen (3) eine gewisse, im Wesentlichen zwangsfreie Verdrehung der angrenzenden Röhrensegmente um die Fugenachse zulassen.

2. Turmkonstruktion gemäss dem voranstehenden Patentanspruch 1, **dadurch gekennzeichnet, dass** zumindest eine Fuge (3) zwischen mindestens zwei Röhrensegmenten (2) in vertikaler Richtung verläuft.

3. Turmkonstruktion gemäss einem der voranstehenden Patentansprüche 1 bis 2, **dadurch gekennzeichnet, dass** zumindest eine Fuge (3) zwischen mindestens zwei Röhrensegmenten (2) schräg verläuft.

4. Turmkonstruktion gemäss einem der voranstehenden Patentansprüche 1 bis 3, **dadurch gekennzeichnet, dass** zumindest eine Fuge (3) zwischen mindestens zwei Teilröhren (2) in horizontaler Richtung verläuft.

5. Turmkonstruktion gemäss einem der voranstehenden Patentansprüche 1 bis 4, **dadurch gekennzeichnet, dass** vertikale und/oder horizontale Stosskanten zumindest teilweise derart ausgebildet sind, dass sie unmittelbar oder mit Hilfe eines zusätzlichen Formelementes (7) eine formschlüssige Verbindung bilden, die in zumindest einer Richtung wirkt.

6. Turmkonstruktion gemäss einem der voranstehenden Patentansprüche 1 bis 5, **dadurch gekennzeichnet, dass** die Teilröhrenspannvorrichtungen zumindest teilweise innerhalb der Wandungen der Teilröhren (1) verlaufen.

7. Turmkonstruktion gemäss einem der voranstehenden Patentansprüche 1 bis 6, **dadurch gekennzeichnet, dass** die Teilröhrenspannvorrichtungen zumindest teilweise ausserhalb der Wandungen der Teilröhren (1) verlaufen.

8. Turmkonstruktion gemäss einem der voranstehenden Patentansprüche 1 bis 7, **dadurch gekennzeichnet, dass** die Teilröhrenspannvorrichtungen zumindest teilweise im Verbund mit den Teilröhren sind.

9. Turmkonstruktion gemäss einer der voranstehenden Patentansprüche 1 bis 8, **dadurch gekennzeichnet, dass** die Teilröhrenspannvorrichtung zumindest teilweise ohne Verbund mit den Teilröhren ist.

10. Turmkonstruktion gemäss einem der voranstehenden Patentansprüche 1 bis 9, **dadurch gekennzeichnet, dass** die Segmentspannvorrichtungen zumindest teilweise innerhalb der Wandungen der Teilröhren (1) verlaufen.

11. Turmkonstruktion gemäss einem der voranstehenden Patentansprüche 1 bis 10, **dadurch gekennzeichnet, dass** die Segmentspannvorrichtungen zumindest teilweise ausserhalb der Wandungen der Teilröhren (1) verlaufen.

12. Turmkonstruktion gemäss einem der voranstehenden Patentansprüche 1 bis 11, **dadurch gekennzeichnet, dass** die Segmentspannvorrichtung zumindest teilweise im Verbund mit den Teilröhren ist.

13. Turmkonstruktion gemäss einer der voranstehenden Patentansprüche 1 bis 12, **dadurch gekennzeichnet, dass** die Segmentspannvorrichtung zumindest teilweise ohne Verbund mit den Teilröhren ist.

14. Turmkonstruktion gemäss einem der voranstehenden Patentansprüche 1 bis 13, **dadurch gekennzeichnet, dass** das Fugenfüllmaterial (8) zumindest in einigen Fugen (3) elastisch ausgebildet ist.

15. Turmkonstruktion gemäss einem der voranstehenden Patentansprüche 1 bis 14, **dadurch gekennzeichnet, dass** unterschiedliche Fugen (39) unterschiedliches Fugenfüllmaterial (8) aufweisen.

16. Turmkonstruktion gemäss einem der voranstehenden Patentansprüche 1 bis 15, **dadurch gekennzeichnet, dass** als Fugenfüllmaterial (8) zumindest teilweise Klebstoff dient.

17. Turmkonstruktion gemäss einem der voranstehenden Patentansprüche 1 bis 16, **dadurch gekennzeichnet, dass** als Fugenfüllmaterial (8) zumindest teilweise Mörtel dient.

18. Turmkonstruktion gemäss einem der voranstehenden Patentansprüche 1 bis 17, **dadurch gekennzeichnet, dass** das Fugenfüllmaterial (8) zumindest teilweise aus Folien besteht.

19. Turmkonstruktion gemäss einem der voranstehenden Patentansprüche 1 bis 18, **dadurch gekennzeichnet, dass** das Fugenfüllmaterial (8) über den Querschnitt der verfüllten Fuge (3) unterschiedliche Eigenschaften aufweist.

20. Turmkonstruktion gemäss einem der voranstehenden Patentansprüche 1 bis 19, **dadurch gekennzeichnet, dass** die in vertikaler Richtung entlang der Wandung verlaufenden Fugen (3) der Teilröhren (1) miteinander fluchtend angeordnet sind.

21. Turmkonstruktion gemäss einem der voranstehenden Patentansprüche 1 bis 20, **dadurch gekennzeichnet, dass** die formschlüssigen Verbindungen zumindest teilweise zwischen den Röhrensegmenten (2) gegenseitig verzahnte Verläufe aufweisen.

22. Turmkonstruktion gemäss einem der voranstehenden Patentansprüche 1 bis 21, **dadurch gekennzeichnet, dass** die formschlüssigen Verbindungen zumindest teilweise zwischen den Röhrensegmenten (2) gegenseitig komplementäre Verläufe aufweisen.

23. Turmkonstruktion gemäss einem der voranstehenden Patentansprüche 1 bis 22, **dadurch gekennzeichnet, dass** die formschlüssigen Verbindungen zumindest teilweise zwischen den Röhrensegmenten (2) gegenseitig ineinander greifende nicht-komplementäre Verläufe aufweisen.

24. Turmkonstruktion gemäss einem der voranstehenden Patentansprüche 1 bis 23, **dadurch gekennzeichnet, dass** bei einer formschlüssigen Verbindung zwischen den Röhrensegmenten (2) durch ein zusätzliches Formelement (7) eine Nut-Feder-Verbindung ausgebildet ist.

25. Turmkonstruktion gemäss einem der voranstehenden Patentansprüche 1 bis 24, **dadurch gekennzeichnet, dass** ein gegebenenfalls vorhandenes Formelement (7) für eine formschlüssige Verbindung zwischen den Röhrensegmenten (2) aus dem gleichen Material besteht, wie die Röhrensegmente (2).

26. Turmkonstruktion gemäss einem der voranstehenden Patentansprüche 1 bis 25, **dadurch gekennzeichnet, dass** ein gegebenenfalls vorhandenes Formelement (7) für eine formschlüssige Verbindung zwischen den Röhrensegmenten (2) aus einem anderen Material besteht, wie die Röhrensegmente (2).

27. Turmkonstruktion gemäss einem der voranstehenden Patentansprüche 1 bis 26, **dadurch gekennzeichnet, dass** die Röhrensegmente (2) aus Faserbeton hergestellt sind.

28. Turmkonstruktion gemäss einem der voranstehenden Patentansprüche 1 bis 27, **dadurch gekennzeichnet, dass** die Röhrensegmente (2) zumindest im fugenangrenzenden Bereich eine Bewehrung (11) aufweisen.

29. Turmkonstruktion gemäss einem der voranstehenden Patentansprüche 1 bis 28, **dadurch gekennzeichnet, dass** die Röhrensegmente (2) ausschliesslich im fugenangrenzenden Bereich eine Bewehrung (11) aufweisen.

30. Turmkonstruktion gemäss einem der voranstehenden Patentansprüche 1 bis 29, **dadurch gekennzeichnet, dass** an mindestens einem Ende der Turmkonstruktion auf vertikale Fugen verzichtet wird.

31. Turmkonstruktion gemäss einem der voranstehenden Patentansprüche 1 bis 30, **dadurch gekennzeichnet, dass** im Bereich von Öffnungen auf vertikale Fugen verzichtet wird.

32. Turmkonstruktion gemäss einem der voranstehenden Patentansprüche 1 bis 31, **dadurch gekennzeichnet, dass** im Bereich von Anbauten auf vertikale Fugen verzichtet wird.

33. Turmkonstruktion gemäss einem der voranstehenden Patentansprüche 1 bis 32, **dadurch gekennzeichnet, dass** zumindest ein Teil der verwendeten Teilröhren (1) zylindrisch ausgebildet ist.

34. Turmkonstruktion gemäss einem der voranstehenden Patentansprüche 1 bis 33, **dadurch gekennzeichnet, dass** zumindest ein Teil der verwendeten Teilröhren (1) konisch ausgebildet ist.

35. Turmkonstruktion gemäss einem der voranstehenden Patentansprüche 1 bis 34, **dadurch gekennzeichnet, dass** sie Teil einer Windkraftanlage ist.

36. Turmkonstruktion gemäss einem der voranstehenden Patentansprüche 1 bis 34, **dadurch gekennzeichnet, dass** sie Teil einer Fernmeldeanlage ist.

37. Turmkonstruktion gemäss einem der voranstehenden Patentansprüche 1 bis 34, **dadurch gekennzeichnet, dass** sie als Kamin ausgebildet ist.

38. Turmkonstruktion gemäss einem der voranstehenden Patentansprüche 1 bis 34, **dadurch gekennzeichnet, dass** sie als Kühlturm ausgebildet ist.

## Claims

1. A tower construction with an annular cross section, at least comprising:
- a plurality of component tubes (1) arranged concentrically on top of one another, wherein
- at least one component tube (1) is built up from tube segments (2),
- the component tubes (1) have bracing devices, termed component tube bracing devices below, which act at least in the axial direction and extend over at least one horizontal joint (5),
- the tube segments (2) and the component tubes (1) composed thereof form, at their butting edges, joints (3) with gaps (9), and
- the gaps (9) of the joints (3) are filled at least in part with a joint filling material (8), **characterized in that** the at least one component tube (1) is built up from at least three tube segments (2),
- that the tube segments (2) of at least one component tube (1) are pre-stressed relative to one another by means of bracing devices, termed segment bracing devices below, and that
- the filled joints (3) allow a certain, substantially unconstrained rotation of the adjoining tube segments about the joint axis.

2. The tower construction as claimed in the preceding patent claim 1, **characterized in that** at least one joint (3) between at least two tube segments (2) extends in the vertical direction.

3. The tower construction as claimed in either of the preceding patent claims 1 and 2, **characterized in that** at least one joint (3) between at least two tube segments (2) extends obliquely.

4. The tower construction as claimed in one of the preceding patent claims 1 to 3, **characterized in that** at least one joint (5) between at least two component tubes (2) extends in the horizontal direction.

5. The tower construction as claimed in one of the preceding patent claims 1 to 4, **characterized in that** vertical and/or horizontal butting edges are formed at least in part in such a way that they form, directly or with the aid of an additional shaped element (7), a positive locking connection which acts in at least one direction.

6. The tower construction as claimed in one of the preceding patent claims 1 to 5, **characterized in that** the component tube bracing devices extend at least in part inside the walls of the component tubes (1).

7. The tower construction as claimed in one of the preceding patent claims 1 to 6, **characterized in that** the component tube bracing devices extend at least in part outside the walls of the component tubes (1).

8. The tower construction as claimed in one of the preceding patent claims 1 to 7, **characterized in that** the component tube bracing devices are at least in part bonded to the component tubes.

9. The tower construction as claimed in one of the preceding patent claims 1 to 8, **characterized in that** the component tube bracing device is at least in part unbonded to the component tubes.

10. The tower construction as claimed in one of the preceding patent claims 1 to 9, **characterized in that** the segment bracing devices extend at least in part inside the walls of the component tubes (1).

11. The tower construction as claimed in one of the preceding patent claims 1 to 10, **characterized in that** the segment bracing devices extend at least in part outside the walls of the component tubes (1).

12. The tower construction as claimed in one of the preceding patent claims 1 to 11, **characterized in that** the segment bracing device is at least in part bonded to the component tubes.

13. The tower construction as claimed in one of the preceding patent claims 1 to 12, **characterized in that** the segment bracing device is at least in part unbonded to the component tubes.

14. The tower construction as claimed in one of the preceding patent claims 1 to 13, **characterized in that** the joint filling material (8) is designed elastically at least in some joints (3).

15. The tower construction as claimed in one of the preceding patent claims 1 to 14, **characterized in that** different joints (3) have different joint filling material (8).

16. The tower construction as claimed in one of the preceding patent claims 1 to 15, **characterized in that** adhesive serves at least in part as the joint filling material (8).

17. The tower construction as claimed in one of the preceding patent claims 1 to 16, **characterized in that** mortar serves at least in part as the joint filling material (8).

18. The tower construction as claimed in one of the preceding patent claims 1 to 17, **characterized in that** the joint filling material (8) consists at least in part of sheeting.

19. The tower construction as claimed in one of the preceding patent claims 1 to 18, **characterized in that** the joint filling material (8) has different properties over the cross section of the filled joint (3).

20. The tower construction as claimed in one of the preceding patent claims 1 to 19, **characterized in that** the joints (3) of the component tubes (1) extending along the wall in the vertical direction are arranged in alignment with one another.

21. The tower construction as claimed in one of the preceding patent claims 1 to 20, **characterized in that** the positive locking connections comprise, at least in part, interlocking profiles between the tube segments (2).

22. The tower construction as claimed in one of the preceding patent claims 1 to 21, **characterized in that** the positive connections comprise, at least in part, mutually complementary profiles between the tube segments (2).

23. The tower construction as claimed in one of the preceding patent claims 1 to 22, **characterized in that** the positive locking connections comprise, at least in part, mutually inter-engaging non-complementary profiles between the tube segments (2).

24. The tower construction as claimed in one of the preceding patent claims 1 to 23, **characterized in that**, with a positive locking connection between the tube segments (2), a tongue and groove connection is formed by an additional shaped element (7).

25. The tower construction as claimed in one of the preceding patent claims 1 to 24, **characterized in that** an optionally present shaped element (7) for a positive locking connection between the tube segments (2) consists of the same material as the tube segments (2).

26. The tower construction as claimed in one of the preceding patent claims 1 to 25, **characterized in that** an optionally present shaped element (7) for a positive locking connection between the tube segments (2) consists of a material other than that of the tube segments (2).

27. The tower construction as claimed in one of the preceding patent claims 1 to 26, **characterized in that** the tube segments (2) are produced from fiber concrete.

28. The tower construction as claimed in one of the preceding patent claims 1 to 27, **characterized in that** the tube segments (2) have a reinforcement (11) at least in the region adjoining the joints.

29. The tower construction as claimed in one of the preceding patent claims 1 to 28, **characterized in that** the tube segments (2) have a reinforcement (11) exclusively in the region adjoining the joints.

30. The tower construction as claimed in one of the preceding patent claims 1 to 29, **characterized in that** vertical joints are dispensed with at at least one end of the tower construction.

31. The tower construction as claimed in one of the preceding patent claims 1 to 30, **characterized in that** vertical joints are dispensed with in the region of openings.

32. The tower construction as claimed in one of the preceding patent claims 1 to 31, **characterized in that** vertical joints are dispensed with in the region of add-on parts.

33. The tower construction as claimed in one of the preceding patent claims 1 to 32, **characterized in that** at least some of the component tubes (1) used have a cylindrical design.

34. The tower construction as claimed in one of the preceding patent claims 1 to 33, **characterized in that** at least some of the component tubes (1) used have a conical design.

35. The tower construction as claimed in one of the preceding patent claims 1 to 34, **characterized in that** it is part of a wind power installation.

36. The tower construction as claimed in one of the preceding patent claims 1 to 34, **characterized in that** it is part of a telecommunications installation.

37. The tower construction as claimed in one of the preceding patent claims 1 to 34, **characterized in that** it is designed as a chimney.

38. The tower construction as claimed in one of the preceding patent claims 1 to 34, **characterized in that** it is designed as a cooling tower.

## Revendications

1. Construction en forme de tour dotée d'une coupe transversale annulaire, comprenant au moins :
- une pluralité de tubes de composant (1) disposés de manière concentrique les uns sur les autres, dans laquelle
- au moins un tube de composant (1) est constitué de segments de tube (2),
- les tubes de composant (1) comportant des dispositifs de support, qu'on appelle dispositifs de support de tube de composant ci-après, qui agissent au moins dans la direction axiale et qui s'étendent sur au moins un joint horizontal (5),
- les segments de tube (2) et les tubes de composant (1) composés de ceux-ci forment, au niveau de leurs bords de butée, des joints (3) dotés d'intervalles (9), et
- les intervalles (9) des joints (3) sont remplis au moins en partie d'un matériau de remplissage de joint (8), **caractérisé en ce qu'**au moins un tube de composant (1) est formé d'au moins trois segments de tube (2),
- **en ce que** les segments de tube (2) d'au moins un tube de composant (1) sont mutuellement précontraints au moyen de dispositifs de support, qu'on appelle dispositifs de support de segments par la suite, et **en ce que**
- les joints garnis (3) permettent une certaine rotation sensiblement exempte de contrainte des segments jointifs de tube autour de l'axe à joint.

2. Construction en forme de tour selon la revendication 1 précédente du brevet, **caractérisée en ce qu'**au moins un joint (3) entre au moins deux segments de tube (2) s'étend dans la direction verticale.

3. Construction en forme de tour selon l'une ou l'autre des revendications 1 et 2 précédentes du brevet, **caractérisée en ce qu'**au moins un joint (3) entre au moins deux segments de tube (2) s'étend de manière oblique.

4. Construction en forme de tour selon l'une des revendications 1 à 3 précédentes du brevet, **caractérisée en ce qu'**au moins un joint (5) entre au moins deux segments de tube (2) s'étend dans la direction horizontale.

5. Construction en forme de tour selon l'une des revendications 1 à 4 précédentes du brevet, **caractérisée en ce que** les bords de butée verticale et/ou horizontale sont formés au moins en partie de sorte qu'ils forment, directement ou avec l'aide d'un élément supplémentaire formé (7), un raccordement positif de verrouillage qui agit dans au moins une direction.

6. Construction en forme de tour selon l'une des revendications 1 à 5 précédentes du brevet, **caractérisée en ce que** les dispositifs de support de tube de composant s'étendent au moins en partie à l'intérieur des parois des tubes de composant (1).

7. Construction en forme de tour selon l'une des revendications 1 à 6 précédentes du brevet, **caractérisée en ce que** les dispositifs de support de tube de composant s'étendent au moins en partie à l'extérieur des parois des tubes de composant (1).

8. Construction en forme de tour selon l'une des revendications 1 à 7 précédentes du brevet, **caractérisée en ce que** les dispositifs de support de tube de composant sont au moins liés en partie aux tubes de composant.

9. Construction en forme de tour selon l'une des revendications 1 à 8 précédentes du brevet, **caractérisée en ce que** le dispositif de support de tube de composant est au moins en partie non lié aux tubes de composant.

10. Construction en forme de tour selon l'une des revendications 1 à 9 précédentes du brevet, **caractérisée en ce que** les dispositifs de support de segment s'étendent au moins en partie à l'intérieur des parois des tubes de composant (1).

11. Construction en forme de tour selon l'une des revendications 1 à 10 précédentes du brevet, **caractérisée en ce que** les dispositifs de support de segment s'étendent au moins en partie à l'extérieur des parois des tubes de composant (1).

12. Construction en forme de tour selon l'une des revendications 1 à 11 précédentes du brevet, **caractérisée en ce que** le dispositif de support de segment est au moins en partie lié aux tubes de composant.

13. Construction en forme de tour selon l'une des revendications 1 à 12 précédentes du brevet, **caractérisée en ce que** le dispositif de support de segment est au moins en partie non lié aux tubes de composant.

14. Construction en forme de tour selon l'une des revendications 1 à 13 précédentes du brevet, **caractérisée en ce que** le matériau de garniture de joint (8) est conçu élastiquement au moins dans certains joints (3).

15. Construction en forme de tour selon l'une des revendications 1 à 14 précédentes du brevet, **caractérisée en ce que** les différents joints (3) ont différents matériaux de garniture de joint (8).

16. Construction en forme de tour selon l'une des revendications 1 à 15 précédentes du brevet, **caractérisée en ce que** l'adhésif sert au moins en partie de matériau de garniture de joint (8).

17. Construction en forme de tour selon l'une des revendications 1 à 16 précédentes du brevet, **caractérisée en ce que** le mortier sert au moins en partie de matériau de garniture de joint (8).

18. Construction en forme de tour selon l'une des revendications 1 à 17 précédentes du brevet, **caractérisée en ce que** le matériau de garniture de joint (8) est constitué au moins en partie d'un feuilleté.

19. Construction en forme de tour selon l'une des revendications 1 à 18 précédentes du brevet, **caractérisée en ce que** le matériau de garniture de joint (8) a différentes propriétés par rapport à la coupe transversale du joint garni (3).

20. Construction en forme de tour selon l'une des revendications 1 à 19 précédentes du brevet, **caractérisée en ce que** les joints (3) des tubes de composant (1) s'étendant le long de la paroi dans la direction verticale sont disposés en alignement mutuel.

21. Construction en forme de tour selon l'une des revendications 1 à 20 précédentes du brevet, **caractérisée en ce que** les raccordements à verrouillage positif comprennent, au moins en partie, des profils de verrouillage entre les segments de tube (2).

22. Construction en forme de tour selon l'une des revendications 1 à 21 précédentes du brevet, **caractérisée en ce que** les raccordements positifs comprennent, au moins en partie, des profils mutuellement complémentaires entre les segments de tube (2).

23. Construction en forme de tour selon l'une des revendications 1 à 22 précédentes du brevet, **caractérisée en ce que** les raccordements à verrouillage positifs comprennent, au moins en partie, des profils mutuellement non complémentaires d'inter-engagement entre les segments de tube (2).

24. Construction en forme de tour selon l'une des revendications 1 à 23 précédentes du brevet, **caractérisée en ce que**, avec un raccordement de verrouillage positif entre les segments de tube (2), un raccordement à langue et à rainure est formé par un élément profilé supplémentaire (7).

25. Construction en forme de tour selon l'une des revendications 1 à 24 précédentes du brevet, **caractérisée en ce qu'**un élément façonné éventuellement présent (7) pour un raccordement de verrouillage positif entre les segments de tube (2) est constitué du même matériau que les segments de tube (2).

26. Construction en forme de tour selon l'une des revendications 1 à 25 précédentes du brevet, **caractérisée en ce qu'**un élément façonné éventuellement présent (7) pour un raccordement de verrouillage positif entre les segments de tube (2) est constitué d'un matériau autre que celui des segments de tube (2).

27. Construction en forme de tour selon l'une des revendications 1 à 26 précédentes du brevet, **caractérisée en ce que** les segments de tube (2) sont obtenus à partir de béton à fibres.

28. Construction en forme de tour selon l'une des revendications 1 à 27 précédentes du brevet, **caractérisée en ce que** les segments de tube (2) présentent un renforcement (11) au moins dans la région proche des joints.

29. Construction en forme de tour selon l'une des revendications 1 à 28 précédentes du brevet, **caractérisée en ce que** les segments de tube (2) présentent un renforcement (11) exclusivement dans la région proche des joints.

30. Construction en forme de tour selon l'une des revendications 1 à 29 précédentes du brevet, **caractérisée en ce que** des joints verticaux sont distribués avec au moins une extrémité de la construction en forme de tour.

31. Construction en forme de tour selon l'une des revendications 1 à 30 précédentes du brevet, **caractérisée en ce que** des joints verticaux sont distribués dans la région des ouvertures.

32. Construction en forme de tour selon l'une des revendications 1 à 31 précédentes du brevet, **caractérisée en ce que** des joints verticaux sont distribués dans la région des parties ajoutées.

33. Construction en forme de tour selon l'une des revendications 1 à 32 précédentes du brevet, **caractérisée en ce qu'**au moins une partie des tubes de composant (1) utilisés ont une conception cylindrique.

34. Construction en forme de tour selon l'une des revendications 1 à 33 précédentes du brevet, **caractérisée en ce qu'**au moins une partie des tubes de composant (1) utilisés ont une conception conique.

35. Construction en forme de tour selon l'une des revendications 1 à 34 précédentes du brevet, **caractérisée en ce qu'**elle fait partie d'une installation de type éolienne.

36. Construction en forme de tour selon l'une des revendications 1 à 34 précédentes du brevet, **caractérisée en ce qu'**elle fait partie d'une installation de télécommunications.

37. Construction en forme de tour selon l'une des revendications 1 à 34 précédentes du brevet, **caractérisée en ce qu'**elle est conçu comme une cheminée.

38. Construction en forme de tour selon l'une des revendications 1 à 34 précédentes du brevet, **caractérisée en ce qu'**elle est conçue comme une tour de refroidissement.
